# DEMANDE DE BREVET EUROPEEN

(11) **EP 2 206 455 A1**
(43) Date de publication de la demande: **14.07.2010**
(21) Numéro de dépôt: 09356067.0
(22) Date de dépôt: 16.12.2009
(51) Int. Cl.: A47J 43/07, A47J 43/06, A47J 43/08

(54) **Appareil électroménager de préparation culinaire comportant un premier et un deuxième récipients de travail sur un boîtier**

(30) Priorité: 22.12.2008 FR 0807347
(71) Demandeur: SEB S.A., 69132 Ecully Cedex (FR)
(72) Inventeur: Blanchard, Thierry, 53000 Laval (FR); Retour, Stéphane, 53100 Moulay (FR); Goupil, Dominique, 53640 Champeon (FR)
(74) Mandataire: Kiehl, Hubert

(57) **Abrégé**

Appareil électroménager de préparation culinaire comportant un premier récipient de travail (1) amovible, un deuxième récipient de travail (2) amovible et un boîtier (100) renfermant un moteur (5) pour l'entrainement en rotation d'un outil de mixage (4) disposé dans le deuxième récipient de travail (2), ledit boîtier (100) comprenant un logement de réception (121) dudit deuxième récipient de travail (2) qui est surélevé par rapport à une embase (110) de réception dudit premier récipient de travail (1), **caractérisé en ce que** le deuxième récipient de travail (2) comporte un robinet (6) permettant de déverser le contenu du deuxième récipient de travail (2) dans le premier récipient de travail (1) lorsque les premier et deuxième récipients de travail sont disposés respectivement sur l'embase (110) et sur le logement de réception (121).

## Description

La présente invention se rapporte au domaine technique général des appareils électroménagers de préparation culinaire comportant un premier et un deuxième récipients de travail disposés sur un boîtier renfermant un moteur pour l'entrainement en rotation d'un outil de mixage placé dans le deuxième récipient de travail et se rapporte plus particulièrement à un appareil dans lequel le boîtier comprend un logement de réception du deuxième récipient de travail qui est surélevé par rapport à une embase de réception du premier récipient de travail.

Il est connu, de la demande de brevet US 4 325 643, un appareil de préparation culinaire comportant un boîtier comprenant une embase pour la réception d'un premier récipient de travail de grand diamètre qui est juxtaposé à un caisson comportant, à son extrémité supérieure, un logement de réception d'un deuxième récipient de travail de plus faible diamètre, de type récipient blender.

Un tel appareil présente l'avantage de permettre la réalisation de travaux nécessitant un outil tournant à basse vitesse dans le premier récipient de travail de grand diamètre, tel que le malaxage de pâte, et la réalisation de travaux nécessitant un outil tournant à haute vitesse dans le récipient blender, par exemple le mixage d'une préparation liquide.

Cependant, cet appareil présente l'inconvénient de nécessiter le retrait du récipient blender de l'appareil lorsque l'utilisateur souhaite déverser son contenu dans un autre récipient, avec le risque de renverser accidentellement son contenu notamment à cause du poids important du récipient blender lorsque celui est rempli de liquide et de la difficulté que peut rencontrer l'utilisateur pour retirer le récipient blender de son logement de réception. De plus, un tel appareil ne permet pas de transférer aisément le contenu du récipient blender vers le récipient de travail de plus grand diamètre, ce qui peut être utile pour la réalisation de certaines recettes.

Aussi, un but de la présente invention est de remédier à ces inconvénients en proposant un appareil de préparation culinaire qui soit très ergonomique d'utilisation et économique à mettre en oeuvre. En particulier, un but de la présente invention est de proposer un appareil de préparation culinaire qui permette de transférer facilement le contenu du récipient de travail disposé en hauteur vers le contenu du récipient de travail disposé plus bas.

A cet effet, l'invention se rapporte à un appareil électroménager de préparation culinaire comportant un premier récipient de travail amovible, un deuxième récipient de travail amovible et un boîtier renfermant un moteur pour l'entrainement en rotation d'un outil de mixage disposé dans le deuxième récipient de travail, le boîtier comprenant un logement de réception du deuxième récipient de travail qui est surélevé par rapport à une embase de réception du premier récipient de travail, **caractérisé en ce que** le deuxième récipient de travail comporte un robinet permettant de déverser le contenu du deuxième récipient de travail dans le premier récipient de travail lorsque les premier et deuxième récipients de travail sont disposés respectivement sur l'embase et sur le logement de réception.

Selon une autre caractéristique de l'invention, le robinet comporte un orifice de sortie débouchant directement au dessus du premier récipient de travail.

Selon une autre caractéristique de l'invention, l'embase comprend des moyens chauffants permettant de chauffer le premier récipient de travail.

Selon une autre caractéristique de l'invention, le logement de réception comporte un premier entraineur pour l'entrainement en rotation de l'outil de mixage et un deuxième entraineur tournant à une vitesse plus faible que celle du premier entraineur.

Selon une autre caractéristique de l'invention, l'appareil comporte un bras de transmission amovible pouvant être disposé partiellement dans le logement de réception, à la place du deuxième récipient de travail, le bras de transmission amovible comportant une première extrémité munie de moyens d'accouplement avec le deuxième entraîneur et une deuxième extrémité, s'étendant au dessus du premier récipient de travail, comprenant des moyens d'entraînement d'un outil de travail disposé dans le premier récipient de travail.

Selon une autre caractéristique de l'invention, le premier récipient de travail comporte un fond comprenant un axe de guidage de l'outil de travail.

Selon encore une autre caractéristique de l'invention, le boîtier comporte un caisson s'élevant à côté de l'embase, le moteur étant intégré dans le caisson.

Selon encore une autre caractéristique de l'invention, le logement de réception est disposé au sommet du caisson.

Selon une autre caractéristique de l'invention, le deuxième récipient de travail est un récipient blender.

Selon une autre caractéristique de l'invention, l'embase comporte, à l'opposé du caisson, un panneau de commande comprenant un bouton permettant de modifier la vitesse de rotation du moteur.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention ;
- la figure 2 est une vue semblable à la figure 1 avec les premier et deuxième récipients de travail désaccouplés du boîtier de l'appareil ;
- la figure 3 est une vue en coupe longitudinale de l'appareil de la figure 1 ;
- les figures 4 et 5 sont des vues en perspective de l'appareil de la figure 1 équipé d'un bras de transmission à la place du deuxième récipient de travail, le bras de transmission étant représenté désaccouplé du boîtier de l'appareil sur la figure 4 ;
- la figure 6 est une vue de dessous du bras de transmission de l'appareil des figures 4 et 5.

Seuls les éléments nécessaires à la compréhension de l'invention ont été représentés. Pour faciliter la lecture des dessins, les mêmes éléments portent les mêmes références d'une figure à l'autre.

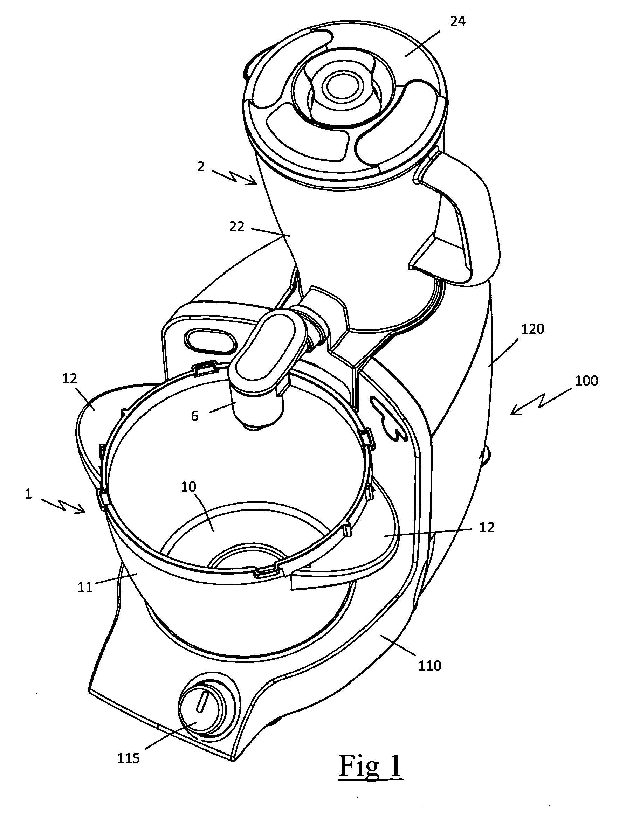

Les figures 1 à 3 illustrent un robot de préparation culinaire comportant un boîtier 100 en forme de L comprenant une embase 110 supportant un premier récipient de travail 1 et un caisson 120 s'étendant verticalement en bordure de l'embase 110, le caisson 120 comportant une extrémité supérieure munie d'un logement de réception 121 d'un deuxième récipient de travail 2.

Le premier récipient de travail 1 présente une contenance de l'ordre de 3 litres et comporte un fond 10, d'un diamètre de l'ordre de 15 cm, qui est surmonté d'une enveloppe circulaire s'étendant sur une hauteur de l'ordre de 14 cm, l'enveloppe 11 présentant une ouverture à son extrémité supérieure présentant un diamètre de l'ordre de 20 cm. De manière avantageuse, le premier récipient de travail 1 est réalisé en matériau thermiquement conducteur, de préférence en acier inoxydable, et comprend deux poignées de préhension 12 disposées de part et d'autre de l'enveloppe 11, à proximité de son extrémité supérieure.

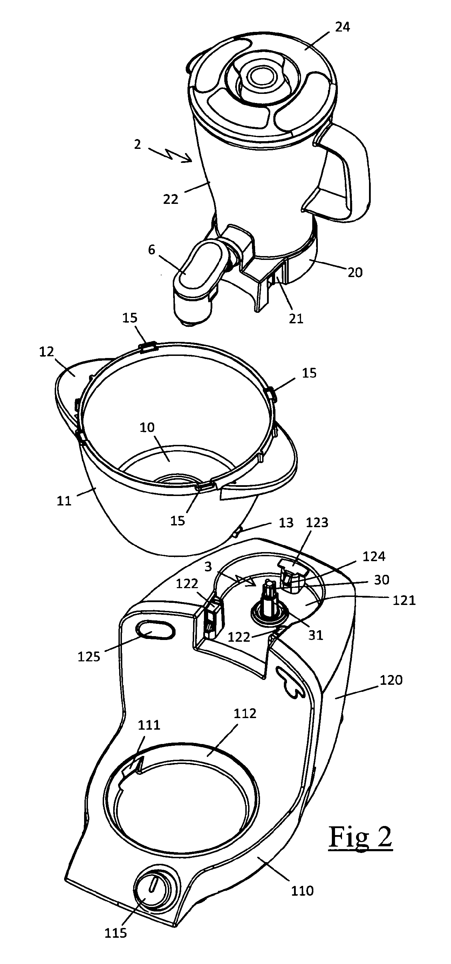

Conformément à la figure 2, le premier récipient de travail 1 comporte également, à son extrémité inférieure, deux ergots 13 pouvant s'engager dans deux rainures 111 formées dans un renfoncement 112 de l'embase 110, de manière à permettre la fixation du premier récipient de travail 1 au moyen d'une liaison de type baïonnette.

Le logement de réception 121 du deuxième récipient de travail 2 présente la forme d'une cavité comprenant un partie sensiblement circulaire se prolongeant par une tranchée rectangulaire débouchant sur une face avant du caisson 120, la cavité présentant un fond plat s'étendant sensiblement à hauteur de l'extrémité supérieure du premier récipient de travail 1 et comprenant un entraineur 3 à deux étages 30, 31 faisant saillie au milieu de la partie sensiblement circulaire de la cavité.

Le logement de réception 121 comporte avantageusement deux bossages latéraux 122 disposés à proximité de la face avant du caisson 120 et un bossage arrière 123 comprenant un loquet de verrouillage 124 permettant d'immobiliser le deuxième récipient de travail 2 dans son logement de réception 121.

De manière préférentielle, le deuxième récipient de travail 2 comporte un socle 20 présentant une forme complémentaire de celle du logement de réception 121, le socle 20 comportant deux renfoncements 21 qui coopèrent avec les bossages 122 pour assurer le bon positionnement du deuxième récipient de travail 2 lorsque ce dernier est placé dans le logement de réception 121.

Le deuxième récipient de travail 2 présente la forme d'un récipient blender, adapté pour le mixage de préparations essentiellement liquides, et comporte à cet effet une enveloppe 22 élancée en matière plastique, d'une hauteur de l'ordre de 18 cm, comprenant des nervures verticales 23 s'étendant à l'intérieur de l'enveloppe 22 et comprenant une ouverture supérieure, présentant un diamètre de l'ordre de 15 cm, fermée par un couvercle amovible 24.

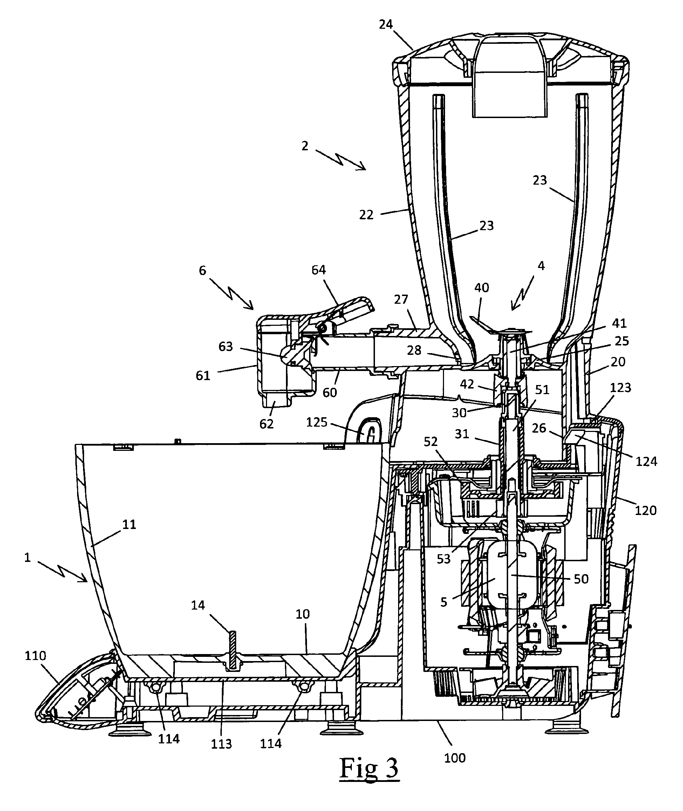

Conformément à la figure 3, le deuxième récipient de travail 2 comprend un fond 25, présentant un diamètre de l'ordre de 10 cm, comportant un outil de mixage 4 comprenant des lames 40 portées par l'extrémité d'un arbre 41 traversant le fond 25 du deuxième récipient 2, l'extrémité inférieure de l'arbre 41 comportant un manchon d'accouplement 42 venant s'engager sur un étage supérieur 30 de l'entraineur.

L'étage supérieur 30 de l'entraineur est entrainé en rotation par un moteur 5 électrique intégré dans le caisson 120 de l'appareil, le moteur 5 comportant un rotor 50 relié à un arbre intermédiaire 51 à l'extrémité duquel est emmanché l'étage supérieur 30 de l'entraineur 3, de sorte que ce dernier est entrainé directement à la vitesse de rotation du moteur 5. De manière avantageuse, l'appareil comporte un bouton de commande 115 disposé sur l'embase 110 permettant de contrôler la vitesse de rotation du moteur 5, l'outil de mixage 4 du deuxième récipient de travail 2 étant adapté pour fonctionner à une vitesse de rotation de l'ordre de 16000 tr/mn.

L'entraineur 3 comporte également un étage inférieur 31 qui est monté rotatif autour de l'arbre intermédiaire 51, l'étage inférieur 31 étant relié au rotor 50 du moteur par l'intermédiaire d'un réducteur de vitesse comportant une cascade de pignons 52, 53 permettant de réduire la vitesse de rotation de telle sorte que l'étage inférieur 31 de l'entraineur tourne environ dix fois moins vite que l'étage supérieur 30.

De manière préférentielle, le socle 20 du deuxième récipient de travail 2 comporte une encoche 26 dans laquelle vient s'engager le loquet 124 du logement de réception 121, ce dernier étant ramené par un ressort dans une position de repos dans laquelle le loquet 124 fait saillie à l'extérieur du bossage arrière 123, le loquet 124 étant solidaire d'un bouton de déverrouillage 125 prévu sur la face avant du caisson 120 permettant de repousser le loquet 124 de manière à extraire ce dernier de l'encoche 26.

Plus particulièrement selon l'invention, le deuxième récipient de travail 2 comporte un robinet 6 permettant de déverser le contenu du deuxième récipient de travail 2 dans le premier récipient de travail 1 sans avoir à retirer le deuxième récipient de travail 2 de son logement de réception 121.

Ce robinet 6 est connecté de manière amovible, par exemple au moyen d'une bride de fixation munie d'une liaison baïonnette, à l'extrémité d'un conduit 27 s'étendant radialement à l'enveloppe 22 et débouchant à l'intérieur de cette dernière par une ouverture filtrante 28.

Le robinet 6 comporte, dans le prolongement du conduit 27, un conduit d'arrivée 60 s'étendant axialement au conduit 27 et débouchant dans une tête 61 de forme sensiblement cylindrique munie d'un orifice de sortie 62 disposé au dessus du premier récipient de travail 1. De manière avantageuse, la tête 61 comporte un joint d'étanchéité 63 qui est relié à un levier d'actionnement 64 articulé sur la tête 61 du robinet, ce levier d'actionnement 64 permettant de déplacer le joint d'étanchéité 63 d'une position de repos, dans laquelle il obture le conduit d'arrivée 60, à une position active dans laquelle le liquide peut s'écouler au travers du robinet 6. Un tel robinet est décrit plus en détail dans la demande de brevet FR 07 04460 déposée par la demanderesse.

De manière préférentielle, l'embase 110 supportant le premier récipient de travail 1 comporte un socle métallique 113 sous lequel est rapportée une résistance chauffante 114 qui peut être mise en marche sur commande, par exemple en appuyant sur le bouton de commande 115, de manière à chauffer par conduction le contenu du premier récipient de travail 1 et permettre par exemple la réalisation de soupes.

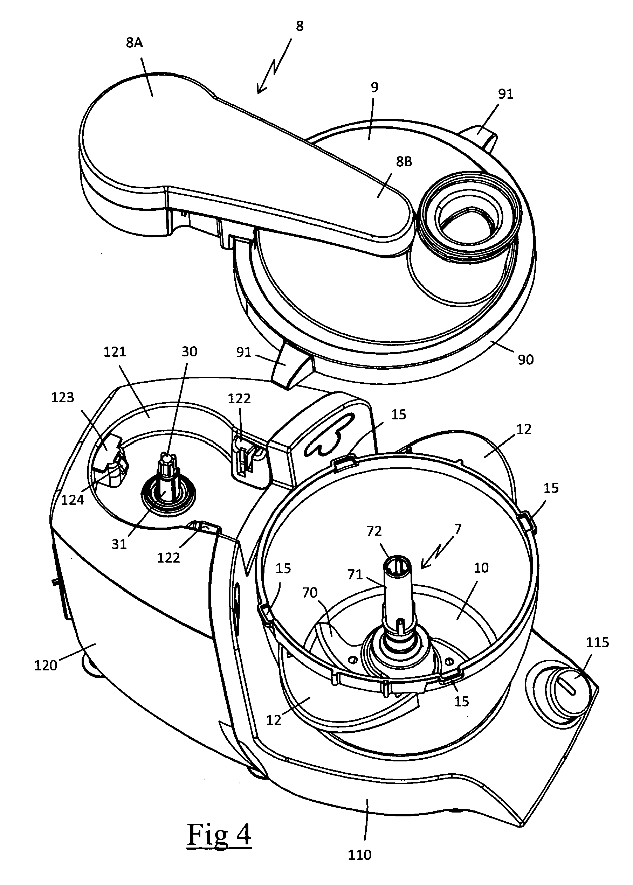

Conformément aux figures 3 et 4, le premier récipient de travail 1 comporte un fond 10 muni en son centre d'un axe de guidage 14 destiné à recevoir un outil de travail 7 du type outil de malaxage, outil de hachage ou tout autre outil de travail destiné à fonctionner à une vitesse de rotation comprise entre 100 et 1500 tr/mn.

L'outil de travail 7 représenté sur la figure 4 est un outil de hachage comportant classiquement des couteaux 70 s'étendant radialement à un moyeu central 71 s'étendant verticalement sur toute la hauteur du premier récipient de travail 1, le moyeu central 71 comportant une extrémité supérieure munie d'un manchon d'accouplement 72 parvenant sensiblement dans le plan supérieur du premier récipient de travail 1.

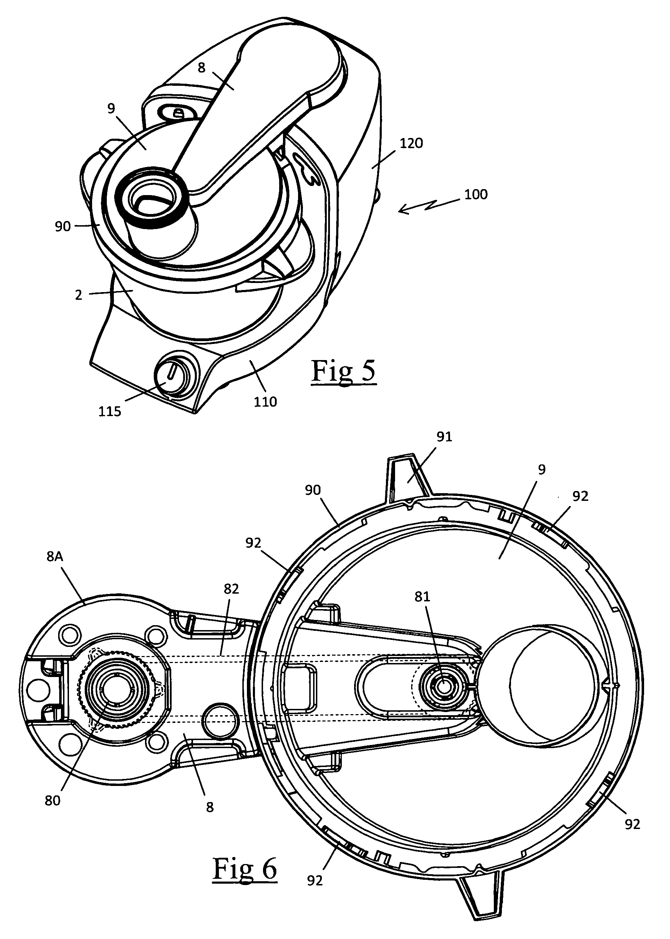

L'outil de travail 7 du premier récipient de travail peut être entrainé en rotation au moyen d'un bras de transmission 8 venant s'installer à la place du deuxième récipient 2 et comportant une première extrémité 8A présentant une forme complémentaire à celle du logement de réception 121, le bras de transmission 8 comportant une deuxième extrémité 8B s'étendant au dessus du premier récipient de travail 1 et supportant un couvercle 9 venant recouvrir le premier récipient 1 ainsi que cela est représenté sur la figure 5.

Conformément à la figure 6, la première extrémité 8A du bras de transmission 8 comporte une douille d'entrainement 80 venant s'accoupler avec l'étage inférieur 31 de l'entraineur et la deuxième extrémité 8B comporte un entraineur rotatif 81 venant s'accoupler avec le manchon d'accouplement 72 de l'outil de travail 7 lorsque le bras de transmission 8 est installé dans le logement de réception 121, la douille d'entrainement 80 et l'entraineur rotatif 81 du bras de transmission 8 étant rendus solidaires en rotation au moyen d'une courroie de transmission 82, représentée en pointillé sur cette figure.

De manière avantageuse, le couvercle 9 comporte une couronne 90 mobile en rotation comprenant deux poignées 91, cette couronne 9 comportant des verrous 92 venant s'engager sous des ergots 15 portés par l'extrémité supérieure du premier récipient de travail 1 de manière à permettre la fixation du couvercle 9 sur le premier récipient de travail 1 par une liaison de type baïonnette.

L'appareil ainsi réalisé présente l'avantage d'être très ergonomique d'utilisation, l'utilisateur pouvant réaliser un mixage d'aliments sensiblement liquides dans le deuxième récipient de travail 2 puis transférer à l'aide du robinet 6 la mixture ainsi obtenue dans le premier récipient de travail 1 pour poursuivre la recette dans le premier récipient de travail 1 présentant une plus large ouverture et donc un meilleur accès.

L'utilisateur peut ainsi transférer très facilement la préparation liquide du deuxième récipient, utilisant un outil rotatif tournant à haute vitesse, dans le premier récipient de manière à poursuivre la préparation avec un outil tournant à plus faible vitesse ou à poursuivre la préparation en chauffant la mixture liquide à l'aide de la résistance chauffante associée à l'embase du premier récipient.

Une fois la préparation terminée, le premier récipient peut être retiré de l'embase et être utilisé directement comme un récipient de présentation, le premier récipient présentant l'avantage de ne comporter aucune partie gênante ou dangereuse une fois l'outil de travail retiré.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, les récipients de travail pourront être réalisés en matière plastique ou en verre.

Ainsi, dans une autre variante de réalisation, la structure du robinet pourra être modifiée.

## Revendications

1. Appareil électroménager de préparation culinaire comportant un premier récipient de travail (1) amovible, un deuxième récipient de travail (2) amovible et un boîtier (100), le boîtier (100) comportant une embase (110) de réception dudit premier récipient de travail (1) et un caisson (120) s'élevant à côté de ladite embase (110), ledit caisson (120) renfermant un moteur (5) pour l'entraînement en rotation d'un outil de mixage (4) disposé dans le deuxième récipient de travail (2) et présentant un sommet comprenant un logement de réception (121) dudit deuxième récipient de travail (2) qui est surélevé par rapport à ladite embase (110), **caractérisé en ce que** le deuxième récipient de travail (2) comporte un robinet (6) permettant de déverser le contenu du deuxième récipient de travail (2) dans le premier récipient de travail (1) lorsque les premier et deuxième récipients de travail sont disposés respectivement sur l'embase (110) et sur le logement de réception (121).

2. Appareil électroménager de préparation culinaire selon la revendication 1, le robinet (6) comporte un orifice de sortie (62) débouchant directement au dessus du premier récipient de travail (1).

3. Appareil électroménager de préparation culinaire selon l'une quelconque des revendications 1 à 2, **caractérisé en ce que** ladite embase (110) comprend des moyens chauffants (114) permettant de chauffer le premier récipient de travail (1).

4. Appareil électroménager de préparation culinaire selon l'une quelconque des revendications 1 à 3, **caractérisé en ce que** ledit logement de réception (121) comporte un premier entraîneur (30) pour l'entraînement en rotation dudit outil de mixage (4) et un deuxième entraîneur (31) tournant à une vitesse plus faible que celle du premier entraîneur (30).

5. Appareil électroménager de préparation culinaire selon la revendication 4, **caractérisé en ce que** ledit logement de réception (121) peut recevoir un bras de transmission (8) amovible, ledit bras de transmission (8) amovible comportant une première extrémité (8A) munie de moyens d'accouplement (80) avec ledit deuxième entraîneur (31) et une deuxième extrémité (8B), s'étendant au dessus du premier récipient de travail (1), comprenant des moyens d'entraînement (81) d'un outil de travail (7) disposé dans ledit premier récipient de travail (1).

6. Appareil électroménager de préparation culinaire selon la revendication 5, **caractérisé en ce que** le premier récipient de travail (1) comporte un fond (10) comprenant un axe de guidage (14) dudit outil de travail (7).

7. Appareil électroménager selon l'une quelconque des revendications 1 à 6, **caractérisé en ce que** ledit deuxième récipient de travail (2) est un récipient blender.

8. Appareil électroménager de préparation culinaire selon l'une quelconque des revendications 1 à 7, **caractérisé en ce que** l'embase (110) comporte, à l'opposé du caisson (120), un panneau de commande comprenant un bouton (115) permettant de modifier la vitesse de rotation du moteur (5).
